# EUROPEAN PATENT SPECIFICATION

(11) **EP 3 756 954 B1**
(45) Date of publication and mention of the grant of the patent: **08.06.2022**
(21) Application number: 20178444.4
(22) Date of filing: 05.06.2020
(51) Int. Cl.: B60R 9/10, B60R 9/06

(54) **BICYCLE CARRIER WITH A TILTING DEVICE**
FAHRRADTRÄGER MIT EINER KIPPVORRICHTUNG
SUPPORT DE BICYCLETTE AVEC UN DISPOSITIF D'INCLINAISON

(30) Priority: 27.06.2019 TW 108208242 U
(43) Date of publication of application: 30.12.2020
(73) Proprietor: King Rack Industrial Co., Ltd., Taichung City (TW)
(72) Inventor: Wang, Chiu-Kuei, Taichung City (TW); Espesset, Hugues Sylvain, Taichung City (TW)
(74) Representative: Cabinet Chaillot

(56) References cited:
- US-A1- 2008 099 522
- US-A1- 2018 134 229
- US-B1- 9 802 549

## Description

### BACKGROUND OF THE INVENTION

### 1. Fields of the invention

The present invention relates to a bicycle carrier, and more particularly, to a tilting device to tilt the bicycle carrier for convenient access to the vehicle rear trunk.

### 2. Descriptions of Related Art

The conventional bicycle carriers are designed to be connected to the vehicle hitch on the back of the vehicle, and bicycles are secured to the bicycle carrier. However, once the conventional bicycle carrier is connected to the vehicle hitch, it is inconvenient for the users to access the vehicle trunk because the bicycle carrier block the opening path of the vehicle trunk. Therefore, the user has to remove the bicycles from the bicycle carrier, and adjust the position of the bicycle carrier such that the vehicle trunk can be opened normally. It takes a lot of time to remove the bicycles from the bicycle carrier and to adjust the bicycle carrier away from the vehicle trunk. All of the bicycles have to be re-positioned to the bicycle carrier, and this is a frustration experience.

The present invention intends to provide a bicycle carrier which has the tilting device of the present invention to easily tilt the bicycle carrier so that the vehicle trunk can be opened without removing the bicycles from the bicycle carrier.

US 9 802 549 B1 discloses a bicycle carrier comprising a bar having a hitch connector formed to a first end thereof, a main tube pivotably connected to another end of the bar and a lock for selectively restricting pivoting movement of the main tube located in the vicinity of a pivot axis of the main tube.

### SUMMARY OF THE INVENTION

The present invention relates to a bicycle carrier as defined in claim 1 and comprising a bar having a hitch connector which is connected to a vehicle hitch. Two engaging plates extend from the bar and each engaging plate has a notch. A main tube is pviotably connected to a connection unit if the bar by a pivot. The main tube has an end cap connected to the first end thereof, and a rod extends through the main tube axially. A spring has a first end thereof connected to the inside of the end cap and a second end thereof connected to a first end of the rod by a latch. The latch transversely extends through the main tube, through the first end of the rod and the second end of the spring. The latch is removably engaged with the notches of the two engaging plates. An operation member is connected to a second end of the main tube, and a second end of the rod is connected to the operation member. A restriction member is pivotably connected to the main tube and removably engaged with the operation member. When the rod is pulled toward the operation member, the latch is dis-engaged from the notches of the two engaging plates. The main tube is pivoted between a first position and a second position. A seat is connected to the main tube and has two positioning plates. A mount plate is attached to the seat and has two passages. A front-wheel support and a rear-wheel support are respectively and pivotably connected between the two positioning plates of the seat. A post unit extends from the main tube and has a post and a clamp unit. The clamp unit includes a movable part movably connected to the post and a clamp.

The passages each receive a securing member which secures the front-wheel support and the rear-wheel support.

Preferably, the bar has multiple wheels connected thereto.

Preferably, each of the front-wheel support and the rear-wheel support has a warning light.

Preferably, the movable part includes a locking member which locks or releases the movable part relative to the post.

According to the invention the restriction member is separated from the operation member, the rod can be pulled by pulling the operation member so as to remove the latch from the notches. The main tube is able to be pivoted about the pivot and the hole to pivot main tube with the seat, the front-wheel support, the rear-wheel support and the post unit from the first position to the second position. In the second position, the main tube is tilt relative to the trunk of the vehicle, so that the users can easily access the stuff in the trunk.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the bicycle carrier of the present invention;
Fig. 2 is an exploded view of the bicycle carrier of the present invention;
Fig. 3 is an exploded view to show the main tube and the bar of the bicycle carrier of the present invention;
Fig. 4 illustrates that the clam unit is movable relative to the post;
Fig. 5 illustrates a side view of the bicycle carrier of the present invention;
Fig. 6 shows that the restriction member is pivoted to release the operation member;
Fig. 7 shows that the rod is pulled by pulling the operation member, and the latch is disengaged from the notches of the connection unit on the bar;
Fig. 8 shows that the main tube is pivoted relative to the bar;
Fig. 9 shows that the securing members are pivoted to horizontal positions;
Fig. 10 shows that the front-wheel support and the rear-wheel support are expanded;
Fig. 11 shows that the securing members are pivoted to horizontal positions;
Fig. 12 shows that the front-wheel support is folded toward the post, and
Fig. 13 shows that the bicycle carrier is moved by the wheels.

### DETAILED DESCRIPTION OF THE PREFERRED EMBODIMENT

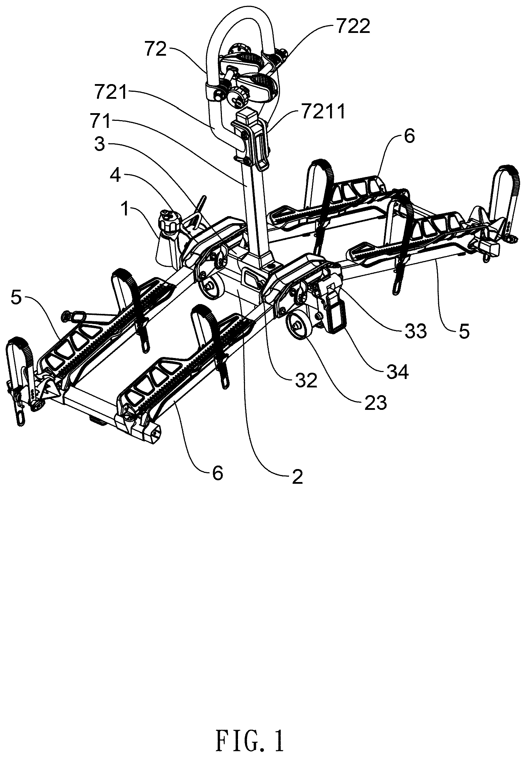

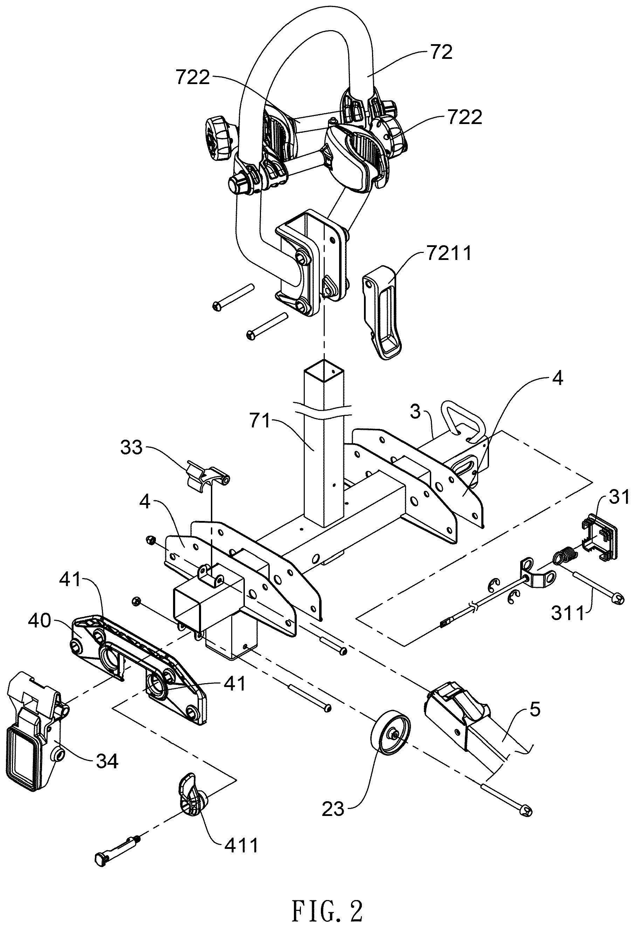

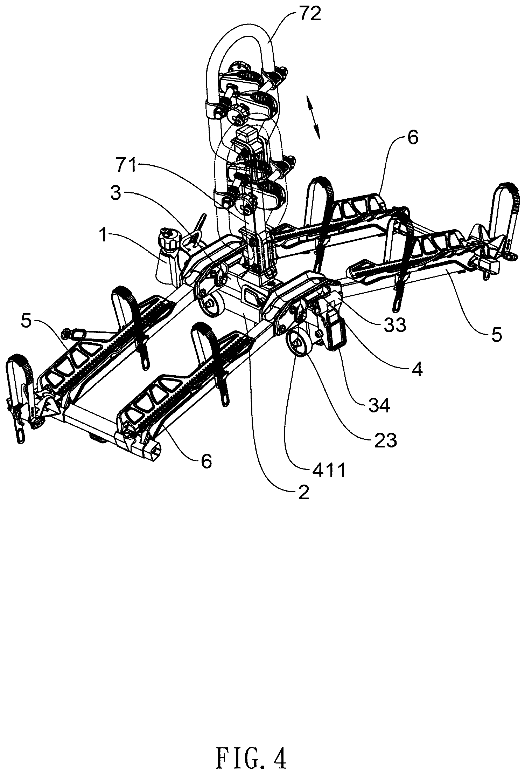

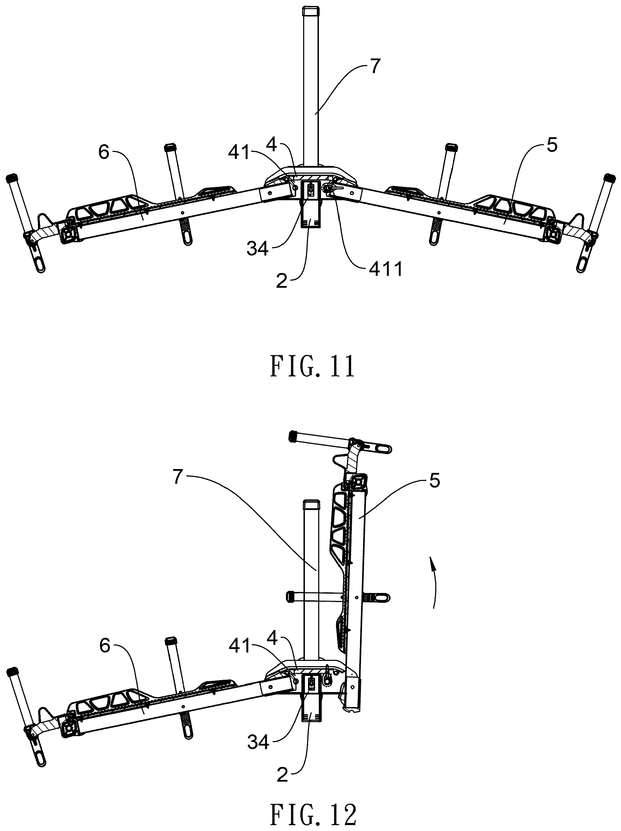

Referring to Figs. 1 to 12, the bicycle carrier of the present invention comprises a bar 2 which is a straight tube and has a hitch connector 1 formed to the first end thereof so as to be connected to a vehicle hitch ball (not shown). A connection unit 22 is formed to the second end of the bar 2, and includes two engaging plates 21 extending from the bar 2. The two engaging plates 21 are located close to the hitch connector 1. Each engaging plate 21 has a notch 211 facing the connection unit 22. A pin 212 is connected between the two engaging plates 21. The connection unit 22 includes two plates and each plate has a hole 221. At least one pair of wheels 231 are connected to the bar 2 for transportation.

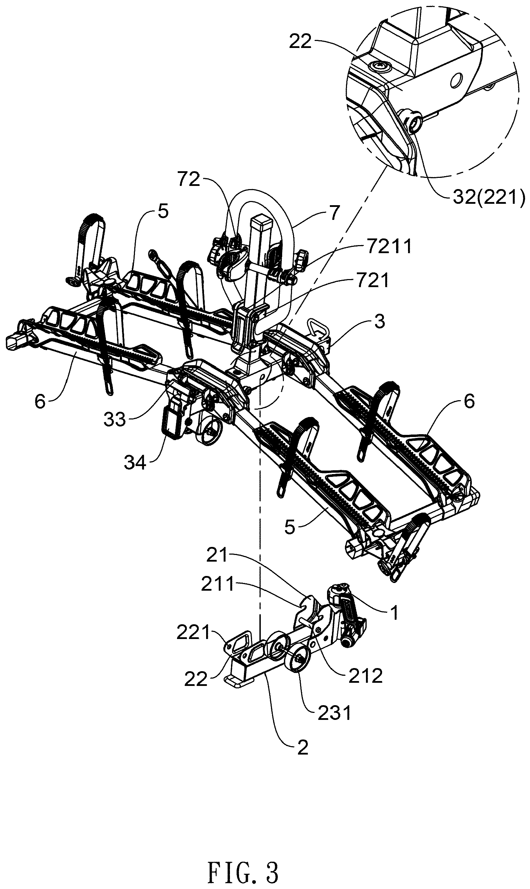

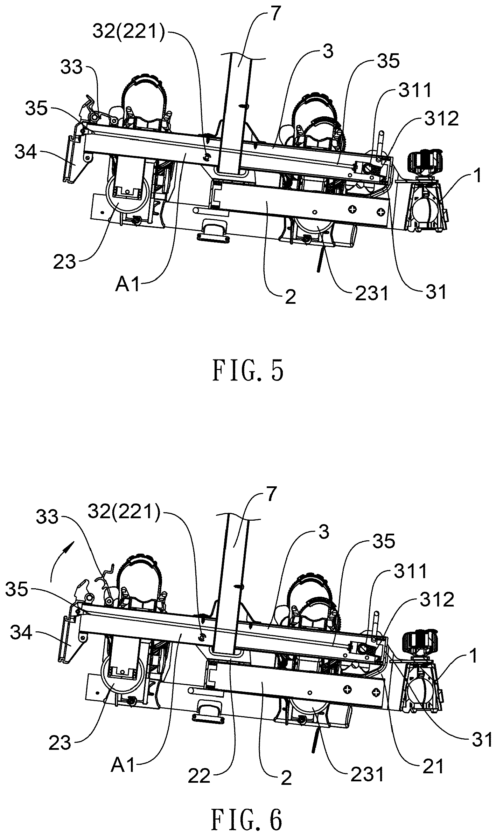

A main tube 3 has a section pivotably connected between the two plates of the connection unit 22 of the bar 2 by extending a pivot 32 through the holes 221 of the connection unit 22 and the main tube 3 as shown in Figs. 3 and 5. The main tube 3 includes an end cap 31 connected to the first end thereof. A rod 35 extends through the main tube 3 axially. A spring 312 has a first end thereof connected to the inside of the end cap 31. A latch 311 transversely extends through the main tube 3, through a U-shaped part on a first end of the rod 35 and a ring part on a second end of the spring 312 as shown in Figs. 3 and 5. The latch 311 is removably engaged with the notches 211 of the two engaging plates 21. An operation member 34 is connected to the second end of the main tube 3. The second end of the rod 35 is connected to the operation member 34. A restriction member 33 is pivotably connected to the main tube 3 and removably engaged with the operation member 34.

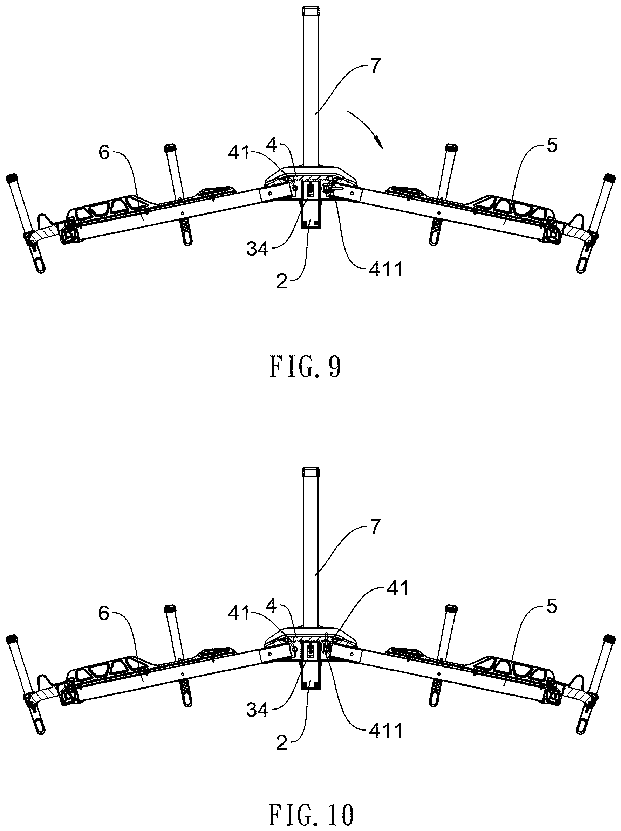

As shown in Figs. 9 to 12, a seat 4 is connected to the main tube 3 and includes two positioning plates. A mount plate 40 is attached to the seat 4 and includes two passages 41. A front-wheel support 5 and a rear-wheel support 6 are respectively and pivotably connected between the two positioning plates of the seat 4. The passages 41 each receive a securing member 411 which secures the front-wheel support 5 and the rear-wheel support 6. A post unit 7 extends from the main tube 3 and includes a post 71 and a clamp unit 72. The clamp unit 72 includes a movable part 721 movably connected to the post 71. The clamp unit 72 includes two clamps 722 which are used to clamp the bicycle frames. The movable part 721 includes a locking member 7211 which locks or releases the movable part 721 relative to the post 71.

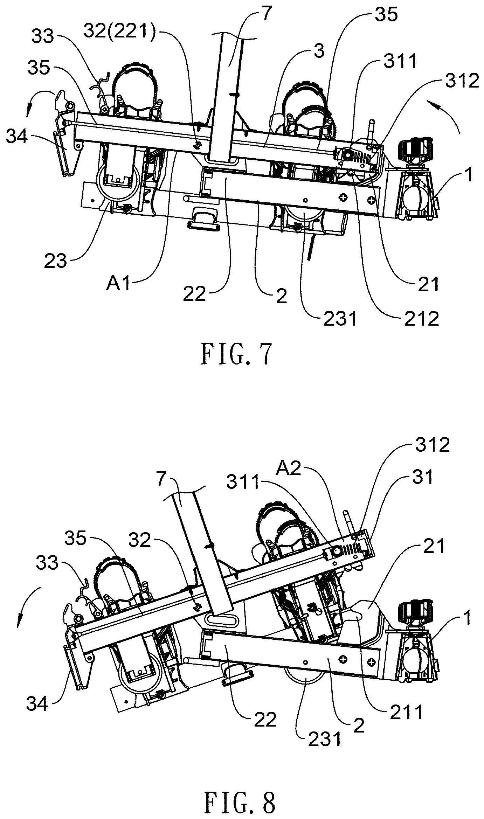

Therefore, when pivoting the restriction member 33 as shown in Fig. 6, the operation member 34 is released, so that the user may pull the rod 35 toward the operation member 34 as shown in Fig. 7, and the latch 311 is dis-engaged from the notches 211 of the two engaging plates 21. The main tube 3 is able to be pivoted about the pivot 32 between a first position A1 and a second position A2 as shown in Fig. 8. When the main tube 3 is pivoted, the seat 4, the front-wheel support 5, the rear-wheel support 6 and the post unit 7 are pivoted from the first position A1 to the second position A2. It is noted that the second position A2 makes the main tube 3 to be tilt relative to the bar 2 and the vehicle trunk (not shown) so that the users can easily access the stuff in the trunk without removing all the bicycles from the bicycle carrier. Preferably, each of the front-wheel support 5 and the rear-wheel support 6 has a warning light.

The front-wheel support 5 and the rear-wheel support 6 can be locked by the securing members 411, or front-wheel support 5 and the rear-wheel support 6 can be released and can be folded toward the post 7 by releasing the securing members 411. When the securing members 411 are pivoted to horizontal positions, the front-wheel support 5 and the rear-wheel support 6 are able to be pivoted. When the securing members 411 are pivoted to upright positions, the front-wheel support 5 and the rear-wheel support 6 are secured and cannot be pivoted.

The height of the movable part 721 is adjusted relative to the post 7, and the clamps 722 can be moved to a desired position by operating the locking members 7211.

The front-wheel support 5 and the rear-wheel support 6 can be folded to save space, or expanded to carry more bicycles.

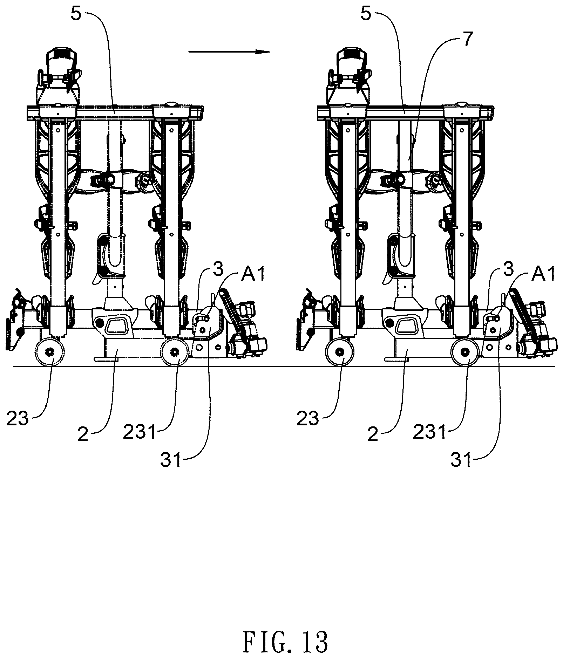

As shown in Fig. 13, the carrier can be moved easily by the wheels 231 on the bar 2 and the wheels 23 on the main tube 3. That is to say, the carrier becomes a trolley.

## Claims

1. A bicycle carrier comprising:
a bar (2) having a hitch connector (1) formed to a first end thereof, a connection unit (22) formed to a second end of the bar (2), two engaging plates (21) extending from the bar (2) and located close to the hitch connector (1), each engaging plate (21) having a notch (211), a pin (212) connected between the two engaging plates (21), the connection unit (22) having a hole (221);
a main tube (3) having a section pivotably connected to the connection unit (22) of the bar (2) by extending a pivot (32) through the hole (221) of the connection unit (22) and the main tube (3), the main tube (3) having an end cap (31) connected to a first end thereof, a rod (35) extending through the main tube (3) axially, a spring (312) having a first end thereof connected to an inside of the end cap (31) and a second end thereof connected to a first end of the rod (35) by a latch (311), the latch (311) transversely extending through the main tube (3), through the first end of the rod (35) and the second end of the spring (312), the latch (311) removably engaged with the notches (211) of the two engaging plates (21), an operation member (34) connected to a second end of the main tube (3), a second end of the rod (35) connected to the operation member (34) so that when the rod (35) is pulled toward the operation member (34), the latch (311) is dis-engaged from the notches (211) of the two engaging plates (21), a restriction member (33) pivotably connected to the main tube (3) and removably engaged with the operation member (34), the restriction member (33) being designed to restrict a movement of the operation member (34) when engaged with the operation member (34), the main tube (3) being pivotable between a first position (A1) and a second position (A2), the main tube (3) at the second position (A2) being tilt relative to the bar (2);
a seat (4) connected to the main tube (3) and having two positioning plates, a mount plate (40) attached to the seat (4) and having two passages (41), the passages (41) each receiving a securing member (411) which secures a front-wheel support (5) and a rear-wheel support (6), the front-wheel support (5) and the rear-wheel support (6) being respectively and pivotably connected between the two positioning plates of the seat (4), and
a post unit (7) extending from the main tube (3) and having a post (71) and a clamp unit (72), the clamp unit (72) including a movable part (721) movably connected to the post (71) and a clamp (722).
wherein, when the restriction member (33) is separated from the operation member (34), the rod (35) can be pulled by pulling the operation member (34) so as to remove the latch (311) from the notches (211), the main tube (3) is pivoted about the pivot (32) and the hole (221) to pivot the main tube (3) with the seat (4), the front-wheel support (5), the rear-wheel support (6) and the post unit (7) from the first position (A1) to the second position (A2).

2. The bicycle carrier as claimed in claim 1, wherein the bar (2) has multiple wheels (231) connected thereto.

3. The bicycle carrier as claimed in claim 1, wherein each of the front-wheel support (5) and the rear-wheel support (6) has a warning light.

4. The bicycle carrier as claimed in claim 1, wherein the movable part (721) includes a locking member (7211) which locks or releases the movable part (721) relative to the post (71).

## Patentansprüche

1. - Fahrradträger, Folgendes umfassend:
eine Stange (2) mit einem Kupplungsverbinder (1), der an einem ersten Ende selbiger gebildet ist, einer Verbindungseinheit (22), die an einem zweiten Ende der Stange (2) gebildet ist, zwei Eingriffsplatten (21), die sich von der Stange (2) aus erstrecken und nahe dem Kupplungsverbinder (1) angeordnet sind, wobei jede Eingriffsplatte (21) eine Kerbe (211), einen Stift (212), der zwischen den zwei Eingriffsplatten (21) eingebunden ist, aufweist, wobei die Verbindungseinheit (22) eine Öffnung (221) aufweist,
ein Hauptrohr (3) mit einem Abschnitt, der schwenkbar mit der Verbindungseinheit (22) der Stange (2) verbunden ist, indem sich ein Drehzapfen (32) durch die Öffnung (221) der Verbindungseinheit (22) und das Hauptrohr (3) erstreckt, wobei das Hauptrohr (3) Folgendes aufweist: eine Endkappe (31), die mit einem ersten Ende desselben verbunden ist, einen Stab (35), der sich axial durch das Hauptrohr (3) erstreckt, eine Feder (312), deren erstes Ende mit einer Innenseite der Endkappe (31) verbunden ist und deren zweites Ende durch einer Klinke (311) mit einem ersten Ende des Stabes (35) verbunden ist, wobei sich die Klinke (311) quer durch das Hauptrohr (3), durch das erste Ende des Stabes (35) und das zweite Ende der Feder (312) erstreckt, wobei die Klinke (311) entfernbar mit den Kerben (211) der zwei Eingriffsplatten (21) in Eingriff steht, ein Bedienelement (34), das mit einem zweiten Ende des Hauptrohrs (3) verbunden ist, wobei ein zweites Ende des Stabes (35) derart mit dem Bedienelement (34) verbunden ist, dass sich die Klinke (311) von den Kerben (211) der zwei Eingriffsplatten (21) löst, wenn der Stab (35) hin zu dem Bedienelement (34) gezogen wird, ein Beschränkungselement (33), das schwenkbar mit dem Hauptrohr (3) verbunden ist und entfernbar mit dem Bedienelement (34) in Eingriff steht, wobei das Beschränkungselement (33) dafür gestaltet ist, eine Bewegung des Bedienelements (34) zu beschränken, wenn es mit dem Bedienelement (34) in Eingriff steht, wobei das Hauptrohr (3) zwischen einer ersten Position (A1) und einer zweiten Position (A2) schwenkbar ist, wobei das Hauptrohr (3) in der zweiten Position (A2) relativ zur Stange (2) geneigt ist,
einen Sitz (4), der mit dem Hauptrohr (3) verbunden ist und zwei Positionierungsplatten, eine Montageplatte (40) aufweist, die an dem Sitz (4) angebracht ist, und zwei Durchlässe (41) aufweist, wobei die Durchlässe (41) jeweils ein Sicherungselement (411) aufnehmen, das eine Vorderradstütze (5) und eine Hinterradstütze (6) sichert, wobei die Vorderradstütze (5) und die Hinterradstütze (6) entsprechend und schwenkbar zwischen den zwei Positionierungsplatten des Sitzes (4) eingebunden sind, und
eine Säuleneinheit (7), die sich von dem Hauptrohr (3) erstreckt und eine Säule (71) und eine Klemmeinheit (72) aufweist, wobei die Klemmeinheit (72) einen beweglichen Teil (721), der beweglich mit der Säule (71) verbunden ist, und eine Klemme (722) beinhaltet,
wobei, wenn das Beschränkungselement (33) von dem Bedienelement (34) getrennt ist, die Stange (35) durch Ziehen am Bedienelement (34) derart gezogen werden kann, dass die Klinke (311) von den Kerben (211) entfernt wird, das Hauptrohr (3) um den Drehzapfen (32) und die Öffnung (221) geschwenkt wird, um das Hauptrohr (3) mit dem Sitz (4), der Vorderradstütze (5), der Hinterradstütze (6) und der Säuleneinheit (7) von der ersten Position (A1) in die zweite Position (A2) zu schwenken.

2. - Fahrradträger nach Anspruch 1, wobei die Stange (2) mehrere mit ihr verbundene Räder (231) aufweist.

3. - Fahrradträger nach Anspruch 1, wobei die Vorderradstütze (5) und die Hinterradstütze (6) jeweils eine Warnleuchte aufweisen.

4. - Fahrradträger nach Anspruch 1, wobei der bewegliche Teil (721) ein Arretierungselement (7211) beinhaltet, das den beweglichen Teil (721) relativ zu der Säule (71) arretiert oder löst.

## Revendications

1. - Porte-bicyclette comprenant :
une barre (2) ayant un raccord d'attelage (1) formé à une première extrémité de celle-ci, une unité de liaison (22) formée à une seconde extrémité de la barre (2), deux plaques d'engagement (21) s'étendant à partir de la barre (2) et situées à proximité du raccord d'attelage (1), chaque plaque d'engagement (21) ayant une encoche (211), une broche (212) reliée entre les deux plaques d'engagement (21), l'unité de liaison (22) ayant un trou (221) ;
un tube principal (3) ayant une section reliée de manière pivotante à l'unité de liaison (22) de la barre (2) par extension d'un pivot (32) à travers le trou (221) de l'unité de liaison (22) et le tube principal (3), le tube principal (3) ayant un capuchon d'extrémité (31) relié à une première extrémité de celui-ci, une tige (35) s'étendant à travers le tube principal (3) axialement, un ressort (312) dont une première extrémité est reliée à un intérieur du capuchon d'extrémité (31) et dont une seconde extrémité est reliée à une première extrémité de la tige (35) par un loquet (311), le loquet (311) s'étendant transversalement à travers le tube principal (3), à travers la première extrémité de la tige (35) et la seconde extrémité du ressort (312), le loquet (311) étant engagé de manière amovible avec les encoches (211) des deux plaques d'engagement (21), un élément d'actionnement (34) relié à une seconde extrémité du tube principal (3), une seconde extrémité de la tige (35) étant reliée à l'élément d'actionnement (34) de telle sorte que, lorsque la tige (35) est tirée vers l'élément d'actionnement (34), le loquet (311) est désengagé des encoches (211) des deux plaques d'engagement (21), un élément de restriction (33) relié de manière pivotante au tube principal (3) et engagé de manière amovible avec l'élément d'actionnement (34), l'élément de restriction (33) étant agencé pour limiter un mouvement de l'élément d'actionnement (34) lorsqu'il est engagé avec l'élément d'actionnement (34), le tube principal (3) étant apte à pivoter entre une première position (A1) et une seconde position (A2), le tube principal (3) à la seconde position (A2) étant incliné par rapport à la barre (2) ;
un siège (4) relié au tube principal (3) et ayant deux plaques de positionnement, une plaque de montage (40) fixée au siège (4) et ayant deux passages (41), les passages (41) recevant chacun un élément de fixation (411) qui fixe un support de roue avant (5) et un support de roue arrière (6), le support de roue avant (5) et le support de roue arrière (6) étant reliés respectivement et de manière pivotante entre les deux plaques de positionnement du siège (4), et
une unité de montant (7) s'étendant à partir du tube principal (3) et ayant un montant (71) et une unité de serrage (72), l'unité de serrage (72) comprenant une partie mobile (721) reliée de manière mobile au montant (71) et un élément de serrage (722),
lorsque l'élément de restriction (33) est séparé de l'élément d'actionnement (34), la tige (35) pouvant être tirée en tirant l'élément d'actionnement (34) de façon à retirer le loquet (311) des encoches (211), le tube principal (3) étant pivoté autour du pivot (32) et du trou (221) pour faire pivoter le tube principal (3) avec le siège (4), le support de roue avant (5), le support de roue arrière (6) et l'unité de montant (7) de la première position (A1) à la seconde position (A2).

2. - Porte-bicyclette selon la revendication 1, dans lequel la barre (2) a de multiples roues (231) reliées à celle-ci.

3. - Porte-bicyclette selon la revendication 1, dans lequel chacun du support de roue avant (5) et du support de roue arrière (6) a un feu d'avertissement.

4. - Porte-bicyclette selon la revendication 1, dans lequel la partie mobile (721) comprend un élément de verrouillage (7211) qui verrouille ou libère la partie mobile (721) par rapport au montant (71).
